(19) Europäisches Patentamt
European Patent Office
Office européen des brevets

(11) **EP 3 782 895 B1**

(12) **EUROPÄISCHE PATENTSCHRIFT**

(45) Veröffentlichungstag und Bekanntmachung des Hinweises auf die Patenterteilung:
**08.06.2022   Patentblatt 2022/23**

(21) Anmeldenummer: **19192575.9**

(22) Anmeldetag: **20.08.2019**

(51) Internationale Patentklassifikation (IPC):
***B62M 6/50*** *(2010.01)*

(52) Gemeinsame Patentklassifikation (CPC):
**B62M 6/50; B62J 45/4152**

(54) **ELEKTROFAHRRAD**

ELECTRIC BICYCLE

BICYCLETTE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.02.2021   Patentblatt 2021/08**

(73) Patentinhaber: **Amprio GmbH**
**41460 Neuss (DE)**

(72) Erfinder:
• **MISGELD, Berno Johannes**
**41460 Neuss (DE)**
• **GREVEN, Dietmar**
**41460 Neuss (DE)**
• **BERGMANN, Lukas**
**41460 Neuss (DE)**

(74) Vertreter: **terpatent Patentanwälte ter Smitten Eberlein-Van Hoof Rütten Daubert Partnerschaftsgesellschaft mbB**
**Burgunderstraße 29**
**40549 Düsseldorf (DE)**

(56) Entgegenhaltungen:
DE-A1-102010 017 742      ES-A1- 2 603 288
US-A1- 2016 059 928      US-A1- 2016 375 957
US-A1- 2017 355 420

**EP 3 782 895 B1**

**Beschreibung**

Die Erfindung betrifft ein Elektrofahrrad.

Unter einem Elektrofahrrad wird ein Fahrrad mit einer elektromotorischen Fahrunterstützung, ein sogenanntes Pedelec, verstanden. Derartige Elektrofahrräder sind im Allgemeinen bekannt. Die elektromotorische Fahrunterstützung erfolgt üblicherweise durch einen elektrischen Antrieb, welcher einen Elektromotor aufweist, wobei der Elektromotor von einer am Elektrofahrrad angeordneten Batterie mit elektrischer Energie versorgt wird. Die Höhe der elektromotorischen Fahrunterstützung hängt von einem durch einen Fahrer des Elektrofahrrades eingestellten Unterstützungsgrad und von einem in die Tretkurbelwelle eingebrachten Fahrerdrehmoment ab, wobei beispielsweise bei einer Erhöhung des in die Tretkurbelwelle eingeleiteten Fahrerdrehmoments auch die elektromotorische Fahrunterstützung durch eine entsprechende Ansteuerung des Elektromotors erhöht wird. Gleichwohl ist der Elektromotor im Regelfall nicht aktiv, wenn der Fahrer kein Fahrerdrehmoment in die Tretkurbelwelle einleitet. Um eine derartige Abhängigkeit zwischen dem Fahrerdrehmoment und der elektromotorischen Unterstützung bereitzustellen, ist üblicherweise ein kostenintensiver Drehmomentsensor zur Ermittlung des Fahrerdrehmoments vorgesehen. Der Drehmomentsensor ist üblicherweise an der Tretkurbelwelle angeordnet und misst das über die Tretkurbelwelle an ein Kettenblatt übertragene Fahrerdrehmoment. Eine derartige Ausgestaltung des elektrischen Antriebs ist beispielsweise aus der EP 2 997 340 A1 bekannt.

Die DE 10 2010 017 742 A1, ES 2 603 288 A1, die alle Merkmale des Oberbegriffs des unabhängigen Anspruchs 1 offenbart, und die US 2006/0095191

A1 offenbaren ein Verfahren zur Ansteuerung eines elektrischen Antriebs eines Elektrofahrrades, bei welchem das Fahrerdrehmoment geschätzt wird, so dass kein relativ aufwendiger Drehmomentsensor zur Ermittlung des Fahrerdrehmoments erforderlich ist. Die Abschätzung des Fahrerdrehmoments erfolgt mittels eines in einer Steuereinheit hinterlegten fahrdynamischen Modells, wobei aus den Eingangsgrößen, wie beispielsweise der Trittfrequenz des Fahrers, der Fahrgeschwindigkeit des Fahrrades, des Motordrehmoments und der Nickneigung des Fahrrads, das Fahrerdrehmoment abgeschätzt wird.

Die Neigung des Elektrofahrrads um seine Querachse, auch als Nicken bezeichnet, wird mittels eines Vertikalbeschleunigungssensors ermittelt, wobei der Vertikalbeschleunigungssensor die Erdbeschleunigung erfasst und durch die Abweichung der gemessenen Beschleunigung von der Erdbeschleunigung die Nickneigung ermittelt wird. Im aktiven Betrieb des Elektrofahrrades können dynamische Störbeschleunigungen auftreten, durch welche die Messsignale des Vertikalbeschleunigungssensors beeinflusst werden. Dadurch nimmt die Genauigkeit des für die Abschätzung des Fahrerdrehmoments erforderlichen Nickneigungswerts ab, wodurch das abgeschätzte Fahrerdrehmoment große Abweichungen relativ zum tatsächlichen, durch den Fahrer erzeugten und in die Tretkurbelwelle eingeleiteten Fahrerdrehmoment aufweisen kann. Die Ungenauigkeiten bei der Messung der Nickneigung des Elektrofahrrades führen zu einer unzureichenden Funktionsweise des elektrischen Antriebs. Der Erfindung liegt die Aufgabe zugrunde, ein Elektrofahrrad bereitzustellen, bei welchem das Fahrerdrehmoment mit einer hohen Genauigkeit geschätzt werden kann.

Diese Aufgabe wird durch ein Elektrofahrrad mit den Merkmalen des Hauptanspruchs gelöst.

Das Elektrofahrrad weist einen elektrischen Antrieb auf. Der elektrische Antrieb kann als Mittelmotor oder als Radnabenmotor ausgeführt sein, wobei der Mittelmotor im Bereich der Tretkurbelwelle angeordnet ist und ein Abtriebselement aufweist. Das Abtriebselement ist beispielsweise ein Kettenblatt und ist antriebsseitig mit einem Elektromotor und abtriebsseitig über eine Kette mit einem Hinterrad drehmomentübertragend verbunden. Der Radnabenmotor ist in der Radnabe des Hinterrades oder des Vorderrades angeordnet, wobei der Elektromotor über ein Abtriebselement drehmomentübertragend direkt mit dem Hinterrad oder dem Vorderrad verbunden ist.

Im unterstützenden Betrieb des Elektrofahrrades wird der Elektromotor derart angesteuert, dass dieser ein vordefinierten Unterstützungs-Drehmoment in Abhängigkeit von dem in die Tretkurbelwelle einwirkenden Fahrerdrehmoment bereitstellt. Dabei kann der Fahrer durch eine Betätigung einer Bedieneinheit unterschiedliche Unterstützungsgrade stufenweise einstellen, wobei durch die Wahl des Unterstützungsgrads eine elektromotorische Unterstützung von beispielsweise 40% des durch den Fahrer in die Tretkurbelwelle eingeleiteten Fahrerdrehmoments bis hin zu 300% des Fahrerdrehmoments eingestellt werden kann.

Der elektrische Antrieb weist eine Berechnungseinheit zum Abschätzen des Fahrerdrehmoments auf, wobei in der Berechnungseinheit ein Berechnungsmodell zur Abschätzung des Fahrerdrehmoments hinterlegt ist. Die Berechnungseinheit berücksichtigt in ihrem Berechnungsmodell neben der Geschwindigkeit des Elektrofahrrades, der Tretkurbeldrehzahl und des durch den Elektromotor erzeugten Motordrehmoments auch die Nickneigung des Elektrofahrrades. Durch die Berücksichtigung der Nickneigung des Elektrofahrrades wird unter anderem der Fahrwiderstand aufgrund einer der Nickneigung entsprechenden Fahrbahnneigung, beispielsweise bei einem Berganstieg, in dem Berechnungsmodell berücksichtigt.

Erfindungsgemäß weist das Elektrofahrrad zur Ermittlung der Nickneigung des Elektrofahrrades einen Fahrrad-Nickdrehratensensor und einen Fahrrad-Vertikalbeschleunigungssensor auf, wobei der Fahrrad-Nickdrehratensensor und der Fahrrad-Vertikalbeschleunigungssensor mit der Berechnungseinheit verbunden sind. Der Fahrrad-Nickdrehratensensor und der Fahrrad-Vertikalbeschleunigungssensor können als gemeinsame Sensoreinheit in dem elektrischen Antrieb integriert sein. Anderenfalls können der Fahrrad-Nickdrehratensensor und der Fahrrad-Vertikalbeschleunigungssensor als separate Sensoreinheiten ausgeführt sein und im elektrischen Antrieb oder an einer beliebigen Stelle, beispielsweise in oder an einem Rahmenrohr, des Elektrofahrrades angeordnet sein.

Der fest am Elektrofahrrad montierte Fahrrad-Vertikalbeschleunigungssensor misst die Vertikalbeschleunigung und erfasst damit die Erdbeschleunigung. Dabei entspricht der durch den Fahrrad-Vertikalbeschleunigungssensor gemessene Vertikalbeschleunigungsmesswert bei einer Nickneigung von 0° der Erdbeschleunigung 9,81 m/s$^2$. Bei einer Nickneigung von ungleich 0° verringert sich der gemessene Vertikalbeschleunigungsmesswert in Abhängigkeit von der Nickneigung. Aus dem erfassten Vertikalbeschleunigungsmesswert wird in Bezug auf die Erdbeschleunigung die Nickneigung des Elektrofahrrades ermittelt.

Im Betrieb des Elektrofahrrades sind der Fahrrad-Nickdrehratensensor und der Fahrrad-Vertikalbeschleunigungssensor dauerhaft aktiv, wobei bei der Ermittlung der Nickneigung des Elektrofahrrades sowohl die Messsignale des Nickdrehratensensors als auch die Messsignale des Vertikalbeschleunigungssensors in dem Berechnungsmodell der Berechnungseinheit berücksichtigt werden.

Die Bestimmung der Nickneigung bei Fahrten mit einer konstanten Geschwindigkeit erfolgt überwiegend durch den Fahrrad-Vertikalbeschleunigungssensor. Eine derartige Bestimmung der Nickneigung mittels des Fahrrad-Vertikalbeschleunigungssensors führt jedoch insbesondere bei hohen Störbeschleunigungen des Elektrofahrrades zu einer ungenauen und unzureichenden Neigungsbestimmung des Elektrofahrrades. Daher wird beim Auftreten von Störbeschleunigungen die Nickneigung des Elektrofahrrades überwiegend durch den Fahrrad-Nickdrehratensensor ermittelt, wobei die Messsignale des Fahrrad-Nickdrehratensensors durch die dynamischen Störbeschleunigungen nicht beeinflusst werden, da der Fahrrad-Nickdrehratensensor ausschließlich auf Änderungen des Neigungswinkels reagiert.

Durch die Kombination eines Fahrrad-Nickdrehratensensor mit einem Fahrrad-Vertikalbeschleunigungssensor kann auch beim Auftreten dynamischer Störbeschleunigungen eine Nickneigung des Elektrofahrrades mit einer hohen Genauigkeit ermittelt werden. Dadurch kann zuverlässig und mit einer hohen Genauigkeit das Fahrerdrehmoment ermittelt werden und ein ordnungsgemäßer Betrieb des elektrischen Antriebs gewährleistet werden.

Die Berechnungseinheit weist eine Gewichtungseinheit auf, wobei die Gewichtungseinheit derart ist, die Signale des Fahrrad-Nickdrehratensensors und des Fahrrad-Vertikalbeschleunigungssensors zu gewichten. Die Gewichtungseinheit ist eingerichtet, die Signale des Fahrrad-Nickdrehratensensors und des Fahrrad-Vertikalbeschleunigungssensors in Abhängigkeit von der Beschleunigung des Elektrofahrrades in Fahrtrichtung zu gewichten. Die Beschleunigung des Elektrofahrrades wird mittels eines hochauflösenden Geschwindigkeitssensors ermittelt, wobei die Beschleunigung des Elektrofahrrades in Fahrtrichtung aus dem Signal des Geschwindigkeitssensors durch eine entsprechende Filterung ermittelt wird. Durch die Gewichtungseinheit können die Störbeschleunigungen aus den ermittelten Beschleunigungen detektiert werden und als Reaktion darauf die Messsignale des Fahrrad-Nickdrehratensensors und des Fahrrad-Vertikalbeschleunigungssensors entsprechend gewichtet werden. Die Gewichtung wird derart gewählt, dass bei relativ hohen Beschleunigungen des Elektrofahrrades die Signale des Fahrrad-Nickdrehratensensors eine höhere Gewichtung aufweisen als die Signale des Fahrrad-Vertikalbeschleunigungssensors und bei relativ niedrigen Beschleunigungen des Elektrofahrrades die Signale des Fahrrad-Vertikalbeschleunigungssensors eine höhere Gewichtung aufweisen als die Signale des Fahrrad-Nickdrehratensensors. Dadurch kann die Nickneigung des Elektrofahrrades bei relativ niedrigen Beschleunigungen des Elektrofahrrades durch den Fahrrad-Vertikalbeschleunigungssensor und bei relativ hohen Beschleunigungen des Elektrofahrrades durch den Fahrrad-Nickdrehratensensor zuverlässig bestimmt werden. Bei der Gewichtung werden den Messsignalen des Fahrrad-Vertikalbeschleunigungssensors und den Messsignalen des Fahrrad-Nickdrehratensensors in Abhängigkeit von der Beschleunigung des Elektrofahrrades in Fahrtrichtung entsprechende Gewichtungsfaktoren zugeordnet, wobei beispielsweise bei hohen Beschleunigungen des Elektrofahrrades dem Messsignal des Fahrrad-Nickdrehratensensors ein Gewichtungsfaktor von 0,8 zugeordnet wird und dem Messsignal des Fahrrad-Vertikalbeschleunigungssensors ein Gewichtungsfaktor von 0,2 zugeordnet wird. Aus einem daraus ergebenden Wert wird die Nickneigung des Elektrofahrrades ermittelt.

Vorzugsweise sind der Fahrrad-Nickdrehratensensor ein 3D-Drehratensensor und/oder der Fahrrad-Vertikalbeschleunigungssensor ein 3D-Beschleunigungssensor, wodurch die Beschleunigungen und die Winkeländerungen in und um die X-, Y- und Z-Achse erfasst werden. Dadurch kann der Nickwinkel des Elektrofahrrades in allen Lagen und Verkippungen des Elektrofahrrades, beispielsweise bei einer Überlagerung von einer Nickneigung und einer Neigung um die Längsachse des Elektrofahrrades, zuverlässig bestimmt werden.

In einer vorteilhaften Ausgestaltung ist die Berechnungseinheit ferner eingerichtet, das Fahrerdrehmoment basierend auf einem Übersetzungsverhältnis zwischen der Tretkurbelwelle und dem Hinterrad abzuschätzen. Dadurch kann das Fahrerdrehmoment auch bei einem Elektrofahrrad mit einer Kettenschaltung, einer Tretlagerschaltung oder einer Nabenschaltung zuverlässig abgeschätzt werden.

Vorzugsweise ist an der Tretkurbelwelle ein Drehzahlsensor vorgesehen und an dem Hinterrad ist ein Drehzahlsensor vorgesehen, wodurch das Übersetzungsverhältnis zwischen der Tretkurbelwelle und dem Hinterrad auf eine einfache und zuverlässige Weise ermittelt werden kann. Alternativ könnte ein Schaltsensor an einer Schalteinheit des Elektrofahrrades vorgesehen werden, durch welchen ein Schaltvorgang detektiert wird und daraus das Übersetzungsverhältnis zwischen der Tretkurbelwelle und dem Hinterrad ermittelt wird.

In einer bevorzugten Ausgestaltung ist die Berechnungseinheit eingerichtet, das Fahrerdrehmoment basierend auf Luftwiderstandsinformationen abzuschätzen, wobei die Luftwiderstandsinformationen einen durch die Fahrradgeschwindigkeit verursachten Luftwiderstand und/oder einen Windwiderstand umfassen. Der Luftwiderstand, welcher aus der Fahrtgeschwindigkeit des Elektrofahrrades resultiert, und insbesondere der Windwiderstand verursachen einen erheblichen Fahrwiderstand. Durch die Berücksichtigung der Luftwiderstandsinformationen in dem Berechnungsmodell können die Abweichungen zwischen dem geschätzten Fahrerdrehmoment und dem tatsächlichen Fahrerdrehmoment reduziert werden.

Vorzugsweise ist zur Ermittlung des Windwiderstands ein Windsensor vorgesehen, wobei der Windsensor in einer bevorzugten Ausgestaltung ein Staurohr ist. Ein Staurohr ist eine Kombination aus einem Pitotrohr und einer statischen Drucksonde, wobei mittels des Pitotrohrs der Gesamtdruck der Luft ermittelt wird und in Kombination mit der statischen Drucksonde der durch den Wind erzeugte dynamische Druck ermittelt wird. Durch einen Windsensor, insbesondere einem Staurohr, können die Windinformationen zuverlässig ermittelt werden.

Vorzugsweise ist eine Empfangseinheit zum drahtlosen Empfangen von Luftwiderstandsinformationen von einem Server vorgesehen. Dabei werden die in einem Server hinterlegten Luftwiderstandsinformationen in Abhängigkeit des Standorts des Elektrofahrrades an die Empfangseinheit übertragen. Dadurch können die Luftwiderstandsinformationen auf eine einfache Weise ermittelt werden.

Vorzugsweise ist die Berechnungseinheit eingerichtet, das Fahrerdrehmoment basierend auf einer Gesamtmasse abzuschätzen, wobei die Gesamtmasse die Fahrradmasse und die Fahrermasse umfasst. Die Gesamtmasse wird unter anderem bei der Ermittlung des durch die Fahrbahnneigung verursachten Fahrwiderstandes miteinbezogen. Die Fahrradmasse und die Fahrermasse kann vorzugsweise mittels eines Gewichtsensors, mittels einer Eingabeinformation und/oder mittels eines vorgegebenen konstanten Werts bestimmt werden. Des Weiteren könnte die Gesamtmasse mit Hilfe eines bekannten Höhenprofil der zurückgelegten Fahrstrecke und der dafür aufgebrachten elektrischen Leistung abgeschätzt werden.

Vorzugsweise ist zur Bestimmung der Fahrermasse ein Gewichtssensor vorgesehen, welcher in einem Sattelrohr eines Fahrradrahmens angeordnet ist. Der Gewichtssensor kann eine Kraftmessdose sein, welche zwischen dem Sattelrohr und einer Sattelstütze, an welcher ein Sattel befestigt ist, angeordnet ist. Durch den in dem Sattelrohr angeordneten Gewichtssensor wird die Fahrermasse automatisch beim Aufsitzen des Fahrers bestimmt und erfordert keine umständliche manuelle Eingabe der Fahrermasse.

Es wird somit ein Elektrofahrrad geschaffen, mit welchem das Fahrerdrehmoment zuverlässig und mit einer hohen Genauigkeit ermittelt werden kann und ein ordnungsgemäßer Betrieb des elektrischen Antriebs gewährleistet werden kann.

Ein Ausführungsbeispiel der Erfindung wird anhand der Zeichnung näher erläutert.

Figur 1 zeigt ein Elektrofahrrad, und

Figur 2 zeigt eine schematische Darstellung der Funktionsweise der Berechnungseinheit eines Elektrofahrrads aus Figur 1.

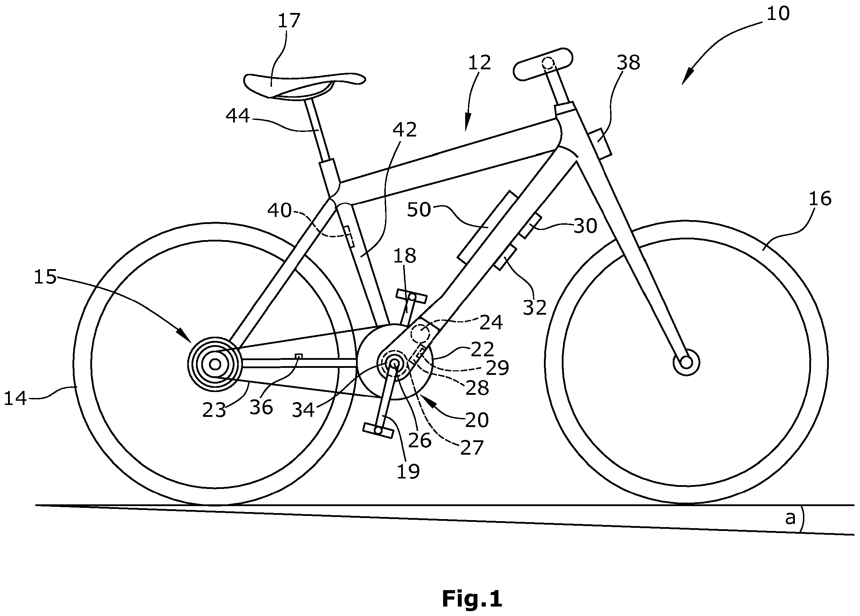

Die Figur 1 zeigt ein Elektrofahrrad 10. Das Elektrofahrrad 10 weist einen Fahrradrahmen 12, ein Hinterrad 14 und ein Vorderrad 16 sowie einen Sattel 17 auf, wobei der Sattel 17 über eine Sattelstütze 44 in ein Sattelrohr 42 des Fahrradrahmens 12 eingesteckt ist. Außerdem weist das Elektrofahrrad 10 eine linke Tretkurbel 18 und eine rechte Tretkurbel 19 auf, welche an einer senkrecht zur Blattebene erstreckenden Tretkurbelwelle 26 befestigt sind. An der Tretkurbelwelle 26 ist ein Abtriebselement 22, beispielsweise ein Kettenblatt, drehfest angeordnet, welches über ein Mittel 23 zur Kraftübertragung, insbesondere eine Kette, mit dem Hinterrad 14 drehmomentübertragend verbunden ist. Zur Kopplung der Kette 23 an dem Hinterrad 14 ist an einer Radnabe des Hinterrads 14 ein Zahnkranzpaket 15 mit mehreren Kettenblättern vorgesehen, wobei die Kettenblätter unterschiedliche Durchmesser und Zähnezahlen aufweisen. Durch das Zahnkranzpaket 15 und eine in der Figur nicht gezeigte Schalteinheit wird eine Kettenschaltung am Elektrofahrrad 10 vorgesehen.

Das Elektrofahrrad 10 weist zur elektromotorischen Unterstützung einen elektrischen Antrieb 20 auf, welcher von einer am Fahrradrahmen 12 angeordneten Batterie 50 mit elektrischer Energie versorgt wird. Der elektrische Antrieb 20 ist im Bereich der Tretkurbelwelle 26 am Fahrradrahmen 12 befestigt und somit als Mittelmotor ausgeführt. Der elektrische Antrieb 20 weist einen Elektromotor 24 auf, welcher über ein, in der Figur nicht gezeigtes Getriebe, mit der Tretkurbelwelle 26 drehmomentübertragend verbunden ist. Durch eine derartige Ausgestaltung des elektrischen Antriebs 20 wird ein vom Elektromotor 24 ausgehendes Motordrehmoment TM und ein von einem Fahrer über die Tretkurbeln 18, 19 in die Tretkurbelwelle 26 eingeleitetes Fahrerdrehmoment TF aufsummiert und zum Antrieb des Elektrofahrrads 10 über das Abtriebselement 22 und die Kette 23 an das Hinterrad 14 weitergeleitet.

Die Höhe der elektromotorischen Fahrunterstützung des Elektromotors 24 hängt von dem durch den Fahrer des Elektrofahrrades 10 eingestellten Unterstützungsgrad und von dem in die Tretkurbelwelle 26 eingebrachten Fahrerdrehmoment TF ab. Dabei wird der Elektromotor 24 in Abhängigkeit vom Fahrerdrehmoment TF angesteuert.

Das für die Ansteuerung des Elektromotors 24 erforderliche Fahrerdrehmoment TF wird über eine in dem elektrischen Antrieb 20 angeordnete Berechnungseinheit 28 abgeschätzt.

Bei der Abschätzung des Fahrerdrehmoments TF werden mehrere sensorisch erfasste Eingangsgrößen, bereits aus der Ansteuerung des Elektromotors 24 bekannte Eingangsgrößen sowie feste physikalische Größen in die untenstehende, erste Gleichung eingesetzt und eine Beschleunigung des Elektrofahrrades 10 in Fahrrichtung ermittelt. Dabei stellt die erste Gleichung ein Kräftegleichgewicht zwischen allen wesentlichen Kräften in Fahrtrichtung des Elektrofahrrades 10 während einer Fahrt des Elektrofahrrades 10 dar. Mittels der zweiten Gleichung wird eine rechnerische Fahrradgeschwindigkeit des Elektrofahrrades 10 ermittelt.

Anschließend wird die rechnerische Fahrradgeschwindigkeit mit einer tatsächlichen Fahrradgeschwindigkeit abgeglichen und eine Abweichung zwischen der rechnerischen Fahrradgeschwindigkeit und der tatsächlichen Fahrradgeschwindigkeit ermittelt. Basierend auf der Abweichung zwischen der rechnerischen und der tatsächlichen Fahrradgeschwindigkeit wird über ein Rückrechnen der ersten Gleichung das Fahrerdrehmoment TF geschätzt.

Im Berechnungsvorgang wird zunächst ein Fahrerdrehmoment TF angenommen und die rechnerische Fahrradgeschwindigkeit ermittelt. Anschließend wird beispielsweise bei einer im Vergleich zur tatsächlichen Fahrradgeschwindigkeit zu niedrigen rechnerischen Fahrradgeschwindigkeit darauf geschlossen, dass das zuvor in der Berechnung der rechnerischen Fahrradgeschwindigkeit angenommene Fahrerdrehmoment TF zu niedrig gewählt wurde. Basierend darauf wird das angenommene Fahrerdrehmoment TF entsprechend korrigiert, im vorliegenden Fall erhöht, und die Berechnung erneut durchgeführt. Dieser Berechnungsvorgang erfolgt solange bis die rechnerische Fahrradgeschwindigkeit mit der tatsächlichen Fahrradgeschwindigkeit übereinstimmt. Die Abschätzung des Fahrerdrehmoments TF erfolgt während der gesamten Fahrt, sodass das sich verändernde Fahrerdrehmoment TF über die gesamte Fahrzeit abgeschätzt wird und die elektromotorische Unterstützung des elektrischen Antriebs 20 und somit das Motordrehmoment TM über die gesamte Fahrzeit an das abgeschätzte Fahrerdrehmoment TF angepasst wird.

$$atotal = \frac{1}{(mtotal + \frac{Jw}{rw^2})} * ((TM+TF)*\frac{(1-y)*Rg}{rw} - mtotal*g*\sin a - Fwind$$

$$- mtotal*g*cr*\cos a - \frac{1}{2}*cd*\rho*Atotal*vbike^2 - b1*vbike - b0)$$

$$vbike = \int atotal\,(t)\,dt$$

In die erste Gleichung fließt eine Gesamtmasse mtotal des Elektrofahrrades 10 inklusive des Fahrers ein. Das Fahrergewicht wird durch einen im Sattelrohr 42 des Fahrradrahmens 12 angeordneten Gewichtssensor 40 erfasst. Der Gewichtssensor 40 ist eine Kraftmessdose, welche zwischen dem Sattelrohr 42 und der Sattelstütze 44 angeordnet ist. Die Masse des Elektrofahrrades 10 ohne den Fahrer ist eine vorbekannte Größe und ist im der Berechnungseinheit 28 hinterlegt.

Ferner fließen ein Übersetzungsverhältnis Rg der Kettenschaltung, welches über einen am Hinterrad 14 angeordneten Drehzahlsensors 36 und einen an der Tretkurbelwelle 26 angeordneten Drehzahlsensors 27 ermittelt wird, ein angenommener Verlustbetrag y der Kettenschaltung, ein durch den Term mtotal*g*cr* cosa berücksichtigter Rollwiderstand der Räder 14, 16 und die Lagerreibung b1, b0 in die erste Gleichung ein.

Des Weiteren wird in der ersten Gleichung der auf das Elektrofahrrad 10 und den Fahrer einwirkende Wind sowie die Nickneigung a des Elektrofahrrades 10 berücksichtigt. Zur Ermittlung des Windwiderstandes Fwind ist am Fahrradrahmen 12 ein Staurohr 38 vorgesehen, durch welches eine zur Berechnung des Windwiderstandes Fwind erforderliche Windgeschwindigkeit erfasst wird. Der durch die Fahrgeschwindigkeit erzeugte Fahrwindwiderstand wird durch den Term $\frac{1}{2}*cd*\rho*Atotal*vbike^2$ berücksichtigt. Alternativ zum Windsensor bzw. Staurohr 38 könnte am Elektrofahrrad 10 ein durch den Fahrer betätigbarer Schalter vorgesehen werden, durch welchen die Windstärke manuell durch den Fahrer vorgegeben werden kann. Ferner könnte das Elektrofahrrad 10 eine Empfangseinheit umfassen, welche in einem Server hinterlegte Informationen über den Windwiderstand in Abhängigkeit vom Standort des Elektrofahrrades 10 drahtlos empfängt.

Weiterhin fließen in die erste Formel der Raddurchmesser rw und die Massenträgheit Jw des Vorder- und Hinterrades 14, 16 ein.

Erfindungsgemäß sind zur Bestimmung der Nickneigung a des Elektrofahrrades 10 ein Fahrrad-Nickdrehratensensor 30 und ein Fahrrad-Vertikalbeschleunigungssensor 32 vorgesehen. Der Fahrrad-Nickdrehratensensor 30 und der Fahrrad-Vertikalbeschleunigungssensor 32 sind als 3D-Sensoren ausgeführt.

Im Betrieb des Elektrofahrrades 10 sind der Fahrrad-Nickdrehratensensor 30 und der Fahrrad-Vertikalbeschleunigungssensor 32 dauerhaft aktiv, wobei bei der Ermittlung der Nickneigung a des Elektrofahrrades 10 sowohl die Messsignale des Nickdrehratensensors 30 als auch die Messsignale des Vertikalbeschleunigungssensors 32 in dem Berechnungsmodell der Berechnungseinheit 28 berücksichtigt werden.

Im Normalfall wird die Nickneigung a überwiegend durch den Fahrrad-Vertikalbeschleunigungssensor 32 ermittelt. Beim Auftreten von Störbeschleunigungen und dadurch einem unzureichenden Messsignal des Fahrrad-Vertikalbeschleunigungssensors 32 wird die Nickneigung a des Elektrofahrrades 10 überwiegend durch den Fahrrad-Nickdrehratensensor 30 ermittelt, wobei die Messsignale des Fahrrad-Nickdrehratensensors 30 im Gegensatz zum Fahrrad-Vertikalbeschleunigungssensor 32 durch die dynamischen Störbeschleunigungen nicht beeinflusst werden.

Inwieweit die Ermittlung der Nickneigung a auf den Messsignalen des Fahrrad-Nickdrehratensensors 30 oder des Fahrrad-Vertikalbeschleunigungssensors 32 basiert wird durch eine in der Berechnungseinheit 28 vorgesehene Gewichtungseinheit 29 bestimmt. Die Gewichtungseinheit 29 ist derart eingerichtet, dass die Signale des Fahrrad-Nickdrehratensensors 30 und des Fahrrad-Vertikalbeschleunigungssensors 32 in Abhängigkeit von der Beschleunigung des Elektrofahrrades 10 in Fahrtrichtung gewichtet werden. Durch die Gewichtungseinheit 29 können die Störbeschleunigungen detektiert werden und als Reaktion darauf die Messsignale des Fahrrad-Nickdrehratensensors 30 und des Fahrrad-Vertikalbeschleunigungssensors 32 entsprechend für die Ermittlung der Nickneigung a gewichtet werden. Dabei wird die Gewichtung derart gewählt, dass bei relativ hohen Beschleunigungen des Elektrofahrrades 10 die Signale des Fahrrad-Nickdrehratensensors 30 eine höhere Gewichtung aufweisen als die Signale des Fahrrad-Vertikalbeschleunigungssensors 32 und bei relativ niedrigen Beschleunigungen des Elektrofahrrades 10 die Signale des Fahrrad-Vertikalbeschleunigungssensors 32 eine höhere Gewichtung aufweisen als die Signale des Fahrrad-Nickdrehratensensors 30.

Dadurch kann die Nickneigung a des Elektrofahrrades 10 bei relativ niedrigen Beschleunigungen des Elektrofahrrades 10 durch den Fahrrad-Vertikalbeschleunigungssensor 32 und bei relativ hohen Beschleunigungen des Elektrofahrrades 10 durch den Fahrrad-Nickdrehratensensor 30 zuverlässig bestimmt werden.

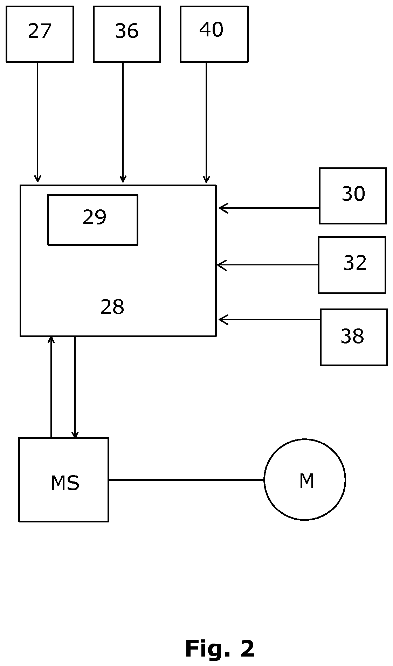

Eine Funktionsweise der Berechnungseinheit bzw. der Ansteuerung des Elektromotors 24 ist in Figur 2 dargestellt, wobei die Berechnungseinheit 28 eine Gewichtungseinheit 29 aufweist und mit den unterschiedlichen Sensoren 27, 30, 32, 36, 38, 40 verbunden ist. Desweiteren ist die Berechnungseinheit 28 mit einer Motorsteuerung MS bidirektional verbunden.

Es sollte deutlich sein, dass auch andere konstruktive Ausführungsformen des Mehrbatterie-Adapters im Vergleich zur beschriebenen Ausführungsform möglich sind, ohne den Schutzbereich des Hauptanspruchs zu verlassen.

**Patentansprüche**

1. Elektrofahrrad (10) mit

   einem elektrischen Antrieb (20), welcher ein Abtriebselement (22) aufweist, wobei das Abtriebselement (22) antriebsseitig zumindest mit einem Elektromotor (24) wirkverbunden ist und abtriebsseitig mit einem Hinterrad (14) oder einem Vorderrad (16) wirkverbunden ist,
   wobei die Höhe eines Unterstützungs-Motordrehmoments (TM) des Elektromotors (24) von einem auf eine Tretkurbelwelle (26) wirkenden Fahrerdrehmoment (TF) abhängt, und
   einer Berechnungseinheit (28), welche eingerichtet ist, das auf die Tretkurbelwelle (26) wirkende Fahrerdrehmoment (TF) abzuschätzen, wobei in der Abschätzung des Fahrerdrehmoments (TF) eine Nickneigung (a) des Elektrofahrrads (10) berücksichtigt ist,
   wobei ein Fahrrad-Nickdrehratensensor (30) und ein Fahrrad-Vertikalbeschleunigungssensor (32) vorgesehen sind, welche mit der Berechnungseinheit (28) verbunden sind, wobei die Signale des Fahrrad-Nickdrehratensensors (30) und des Fahrrad-Vertikalbeschleunigungssensors (32) in die Ermittlung der Nickneigung (a) des Elektrofahrrads (10) einbezogen sind, wobei
   die Berechnungseinheit (28) eine Gewichtungseinheit (29) aufweist, wobei die Gewichtungseinheit (29) eingerichtet ist, die Signale des Fahrrad-Nickdrehratensensors (30) und des Fahrrad-Vertikalbeschleunigungssensors (32) zu gewichten, **dadurch gekennzeichnet, dass**
   die Gewichtungseinheit (29) eingerichtet ist, die Signale des Fahrrad-Nickdrehratensensors (30) und des Fahrrad-Vertikalbeschleunigungssensors (32) in Abhängigkeit von der Beschleunigung des Elektrofahrrades (10) in Fahrtrichtung zu gewichten und

bei relativ hohen Beschleunigungen des Elektrofahrrades (10) die Signale des Fahrrad-Nickdrehratensensors (30) eine höhere Gewichtung aufweisen als die Signale des Fahrrad-Vertikalbeschleunigungssensors (32) und bei relativ niedrigen Beschleunigungen des Elektrofahrrades (10) die Signale des Fahrrad-Vertikalbeschleunigungssensors (32) eine höhere Gewichtung aufweisen als die Signale des Fahrrad-Nickdrehratensensors (30).

2. Elektrofahrrad (10) nach Anspruch 1,

wobei
der Fahrrad-Nickdrehratensensor (30) ein 3D-Drehratensensor und/oder der Fahrrad-Vertikalbeschleunigungssensor (32) ein 3D-Beschleunigungssensor sind.

3. Elektrofahrrad (10) nach einem der vorhergehenden Ansprüche,

wobei
die Berechnungseinheit (28) eingerichtet ist, das Fahrerdrehmoment (TF) basierend auf einem Übersetzungsverhältnis (Rg) zwischen der Tretkurbelwelle (26) und dem Hinterrad (14) abzuschätzen.

4. Elektrofahrrad (10) nach Anspruch 3,

wobei
an der Tretkurbelwelle (26) ein Drehzahlsensor (27) vorgesehen ist und an dem Hinterrad (14) ein Drehzahlsensor (36) vorgesehen ist.

5. Elektrofahrrad (10) nach einem der vorhergehenden Ansprüche, wobei
die Berechnungseinheit (28) eingerichtet ist, das Fahrerdrehmoment (TF) basierend auf Luftwiderstandsinformationen abzuschätzen, wobei die Luftwiderstandsinformationen einen durch die Fahrradgeschwindigkeit verursachten Luftwiderstand und/oder einen Windwiderstand umfassen.

6. Elektrofahrrad (10) nach Anspruch 5,

wobei
zur Ermittlung des Windwiderstands ein Windsensor (38) vorgesehen ist.

7. Elektrofahrrad (10) nach Anspruch 6,

wobei
der Windsensor (38) ein Staurohr ist.

8. Elektrofahrrad (10) nach Anspruch 5,

wobei
eine Empfangseinheit zum drahtlosen Empfangen von Luftwiderstandsinformationen von einem Server vorgesehen ist.

9. Elektrofahrrad (10) nach einem der vorhergehenden Ansprüche, wobei
die Berechnungseinheit (28) eingerichtet ist, das Fahrerdrehmoment (TF) basierend auf einer Gesamtmasse (mtotal) abzuschätzen, wobei die Gesamtmasse die Fahrradmasse und die Fahrermasse umfasst.

10. Elektrofahrrad (10) nach Anspruch 9,

wobei
die Fahrradmasse mittels einer Eingabeinformation und/oder mittels eines vorgegebenen konstanten Werts bestimmbar ist.

11. Elektrofahrrad (10) nach Anspruch 9 oder 10,

wobei

zur Bestimmung der Fahrermasse ein Gewichtssensor (40) vorgesehen ist, welcher in einem Sattelrohr (42) eines Fahrradrahmens (12) angeordnet ist.

**Claims**

1. Electric bicycle (10) with

   an electric drive (20) which comprises an output element (22), wherein the output element (22) is operatively connected on the input side at least to an electric motor (24) and is operatively connected on the output side to a rear wheel (14) or a front wheel (16),
   wherein the level of an assistance motor torque (TM) of the electric motor (24) depends on a rider torque (TF) acting on a pedal crankshaft (26), and a calculation unit (28) which is configured to estimate the rider torque (TF) acting on the pedal crankshaft (26), wherein a pitch inclination (a) of the electric bicycle (10) is taken into account in the estimation of the rider torque (TF),
   wherein a bicycle pitch rate sensor (30) and a bicycle vertical acceleration sensor (32) are provided, which are connected to the calculation unit (28), wherein the signals of the bicycle pitch rate sensor (30) and of the bicycle vertical acceleration sensor (32) are included in the determination of the pitch inclination (a) of the electric bicycle (10),
   wherein
   the calculation unit (28) comprises a weighting unit (29), the weighting unit (29) being configured to weight the signals of the bicycle pitch rate sensor (30) and the bicycle vertical acceleration sensor (32), **characterised in that**
   the weighting unit (29) is configured to weight the signals of the bicycle pitch rate sensor (30) and the bicycle vertical acceleration sensor (32) as a function of the acceleration of the electric bicycle (10) in the direction of travel, and
   at relatively high accelerations of the electric bicycle (10) the signals of the bicycle pitch rate sensor (30) have a higher weighting than the signals of the bicycle vertical acceleration sensor (32) and at relatively low accelerations of the electric bicycle (10) the signals of the bicycle vertical acceleration sensor (32) have a higher weighting than the signals of the bicycle pitch rate sensor (30).

2. Electric bicycle (10) according to claim 1,

   wherein
   the bicycle pitch rotation rate sensor (30) is a 3D-rotation rate sensor and/or the bicycle vertical acceleration sensor (32) is a 3D-acceleration sensor.

3. Electric bicycle (10) according to one of the preceding claims,

   wherein
   the calculation unit (28) is configured to estimate the rider torque (TF) based on a gear ratio (Rg) between the pedal crankshaft (26) and the rear wheel (14).

4. Electric bicycle (10) according to claim 3,

   wherein
   a speed sensor (27) is provided on the pedal crankshaft (26) and a speed sensor (36) is provided on the rear wheel (14).

5. Electric bicycle (10) according to one of the preceding claims, wherein the calculation unit (28) is configured to estimate the rider torque (TF) based on aerodynamic resistance information, wherein the aerodynamic resistance information comprises at least one of aerodynamic resistance caused by the bicycle speed and wind resistance.

6. Electric bicycle (10) according to claim 5,

   wherein
   a wind sensor (38) is provided for determining the wind resistance.

**7.** Electric bicycle (10) according to claim 6,

   wherein
   the wind sensor (38) is a pitot tube.

**8.** Electric bicycle (10) according to claim 5,

   wherein
   a receiving unit is provided for wirelessly receiving aerodynamic resistance information from a server.

**9.** Electric Bicycle (10) according to one of the preceding claims, wherein the calculation unit (28) is configured to estimate the rider torque (TF) based on a total mass (mtotal), wherein the total mass comprises the bicycle mass and the rider mass.

**10.** Electric bicycle (10) according to claim 9,

   wherein
   the bicycle mass is determinable by means of input information and/or by means of a predetermined constant value.

**11.** Electric bicycle (10) according to claim 9 or 10,

   wherein
   a weight sensor (40) is provided for determining the rider's mass, which weight sensor is arranged in a saddle tube (42) of a bicycle frame (12).


**Revendications**

**1.** Bicyclette électrique (10) avec

   un entraînement électrique (20) qui comprend un élément de sortie (22), dans lequel l'élément de sortie (22) est connecté de manière opérationnelle du côté de l'entrée au moins à un moteur électrique (24) et est connecté de manière opérationnelle du côté de la sortie à une roue arrière (14) ou une roue avant (16),
   dans lequel le niveau de la torque du moteur d'assistance (TM) du moteur électrique (24) dépend d'une torque du cycliste (TF) agissant sur un vilebrequin de pédale (26), et
   une unité de calcul (28) qui est configurée pour estimer le torque de l'utilisateur (TF) agissant sur le vilebrequin de la pédale (26), dans laquelle une inclinaison (a) de la bicyclette électrique (10) est prise en compte dans l'estimation du torque de l'utilisateur (TF),
   dans lequel un capteur de taux de tangage de bicyclette (30) et un capteur d'accélération verticale de bicyclette (32) sont prévus, qui sont connectés à l'unité de calcul (28), dans lequel les signaux du capteur de taux de tangage de bicyclette (30) et du capteur d'accélération verticale de bicyclette (32) sont inclus dans la détermination de l'inclinaison de tangage (a) de la bicyclette électrique (10),
   dans lequel
   l'unité de calcul (28) comprend une unité de pondération (29), l'unité de pondération (29) est configurée pour pondérer les signaux du capteur de taux de tangage de la bicyclette (30) et du capteur d'accélération verticale de la bicyclette (32),
   **caractérisé en ce que**
   l'unité de pondération (29) est configurée pour pondérer les signaux du capteur de taux de tangage de la bicyclette (30) et du capteur d'accélération verticale de la bicyclette (32) en fonction de l'accélération de la bicyclette électrique (10) dans la direction de déplacement, et
   à des accélérations relativement hautes de la bicyclette électrique (10), les signaux du capteur de taux de tangage de la bicyclette (30) ont une pondération plus élevée que les signaux du capteur d'accélération verticale de la bicyclette (32) et à des accélérations relativement basses de la bicyclette électrique (10), les signaux du capteur d'accélération verticale de la bicyclette (32) ont une pondération plus élevée que les signaux du capteur de taux de tangage de la bicyclette (30).

**2.** Bicyclette électrique (10) selon la revendication 1,

dans laquelle

le capteur de taux de tangage de la bicyclette (30) est un capteur de taux de rotation 3D et/ou le capteur d'accélération verticale de la bicyclette (32) est un capteur d'accélération 3D.

3. Bicyclette électrique (10) selon l'une des revendications précédentes,

   dans lequel
   l'unité de calcul (28) est configurée pour estimer le torque du cycliste (TF) en fonction d'un ratio d'engrenage (Rg) entre le vilebrequin de la pédale (26) et la roue arrière (14).

4. Bicyclette électrique (10) selon la revendication 3,

   dans laquelle
   un capteur de vitesse (27) est prévu sur le vilebrequin de pédale (26) et un capteur de vitesse (36) est prévu sur la roue arrière (14).

5. Bicyclette électrique (10) selon l'une des revendications précédentes, dans laquelle
   l'unité de calcul (28) est configurée pour estimer le torque du cycliste (TF) sur la base d'une information de résistance aérodynamique, l'information de résistance aérodynamique comprenant au moins une résistance aérodynamique provoquée par la vitesse du vélo et la résistance du vent.

6. Bicyclette électrique (10) selon la revendication 5,

   dans laquelle
   un capteur de vent (38) est prévu pour déterminer la résistance au vent.

7. Bicyclette électrique (10) selon la revendication 6,

   dans laquelle
   le capteur de vent (38) est un tube de Pitot.

8. Bicyclette électrique (10) selon la revendication 5,

   dans laquelle
   une unité de réception est prévue pour recevoir sans fil des informations de résistance aérodynamique par un server.

9. Bicyclette électrique (10) selon l'une des revendications précédentes, dans laquelle
   l'unité de calcul (28) est configurée pour estimer le torque du cycliste (TF) en fonction d'une masse totale (mtotal), la masse totale comprenant la masse du vélo et la masse du cycliste.

10. Bicyclette électrique (10) selon la revendication 9,

    dans laquelle
    la masse de la bicyclette peut être déterminée au moyen d'informations d'entrée et/ou au moyen d'une valeur constante prédéterminée.

11. Bicyclette électrique (10) selon la revendication 9 ou 10,

    dans laquelle
    un capteur de poids (40) est prévu pour déterminer la masse du cycliste, lequel capteur de poids est disposé dans un tube de selle (42) d'un cadre de bicyclette (12).

**Fig.1**

EP 3 782 895 B1

**Fig. 2**

**IN DER BESCHREIBUNG AUFGEFÜHRTE DOKUMENTE**

**In der Beschreibung aufgeführte Patentdokumente**

- EP 2997340 A1
- DE 102010017742 A1
- ES 2603288 A1
- US 20060095191 A